# EUROPEAN PATENT APPLICATION

(11) **EP 4 803 455 A1**
(43) Date of publication of application: **09.09.2026**
(21) Application number: 24885936.5
(22) Date of filing: 21.05.2024
(51) Int. Cl.: B65G 47/57, B65G 47/82, B65G 37/00, B65G 43/08

(54) **OBJECT SUPPLY SYSTEM AND CONTROL METHOD THEREOF**

(30) Priority: 02.11.2023 KR 20230150170
(71) Applicant: CJ Cheiljedang Corporation, Seoul 04560 (KR)
(72) Inventor: LIM, Hyung Sub, Seoul 04560 (KR); KWAK, Dong Ju, Seoul 04560 (KR)
(74) Representative: Meissner Bolte Partnerschaft mbB
(86) International application number: PCT/KR2024/006861
(87) International publication number: WO 2025/095254

(57) **Abstract**

An object supply system includes an object feeding part that feeds an object to a waiting position, a tray conveying part that conveys a tray and disposed on a lower side of the object feeding part, a loading platform that receives the object located at the waiting position from the object feeding part to deliver the object to the tray, and defining a supply hole for loading the object toward the tray, and an opening/closing part mounted on the loading platform to open and close the supply hole such that the object is loaded onto the tray.

## Description

### [Technical Field]

### CROSS-REFERENCE TO RELATED APPLICATION

This application claims priority to Korean Patent Application No. 10-2023-0150170, filed on November 02, 2023, and all contents disclosed in the specification and drawings of the above application are incorporated herein by reference.

### [Technical Field]

The present disclosure relates to an object supply system that supplies objects to a tray and a method for controlling the same.

### [Background Art]

The object supply system may be a system that automatically supplies frozen blocks to a tray. The object supply system may include a tray conveying part that conveys trays and an object feeding part that feeds frozen blocks.

Recently, because consumers who prefer frozen foods are increasing, development of a system of a product in which various ingredients are supplied to a tray is being conducted. Meanwhile, a speed at which a plurality of frozen blocks are supplied to a tray may be related to productivity, and various methods have been applied to improve productivity of the object supply system.

Accordingly, development of a system for automatically supplying a plurality of frozen blocks to a tray at once to improve productivity of the object supply system is emerging.

### [Disclosure]

### [Technical Problem]

An aspect of the present disclosure provides an object supply system that feeds objects automatically and supplies the objects onto a tray, and a method for controlling the same.

### [Technical Solution]

According to an aspect of the present disclosure, an object supply system includes an object feeding part that feeds an object to a waiting position, a tray conveying part that conveys a tray and disposed on a lower side of the object feeding part, a loading platform that receives the object located at the waiting position from the object feeding part to deliver the object to the tray, and defining a supply hole for loading the object toward the tray, and an opening/closing part mounted on the loading platform to open and close the supply hole such that the object is loaded onto the tray.

According to another aspect of the present disclosure, a method for controlling an object supply system includes receiving an object and feeding the object to a waiting position, moving the object fed to the waiting position to an upper loading position, opening an upper supply hole such that the object is moved to a lower loading position based on that the object reaches the upper loading position, and opening a lower supply hole such that the object is loaded onto a tray based on that the object reaches the lower loading position.

### [Advantageous Effects]

According to an embodiment of the present disclosure, because the objects may be fed automatically and supplied onto trays that are being conveyed, productivity of the object supply system may be improved.

According to an embodiment of the present disclosure, because the object supply system may operate without stopping, a production speed of the object supply system may be improved and a durability of the object supply system may be improved at the same time.

### [Description of Drawings]

FIG. 1 is a schematic view of an object supply system according to an embodiment of the present disclosure.
FIG. 2 is a schematic view of a tray conveying part and a loading platform according to an embodiment of the present disclosure.
FIG. 3 is a schematic view of a state in which an object is moved from a waiting position to a first loading position according to an embodiment of the present disclosure.
FIG. 4 is a side view of an object feeding part, a pusher part, and a loading platform according to an embodiment of the present disclosure.
FIG. 5 is a schematic view of a state in which an object is loaded into a tray according to an embodiment of the present disclosure.
FIG. 6 is a block diagram of an object supply system according to an embodiment of the present disclosure.
FIGS. 7 and 8 are flowcharts of a method for controlling an object supply system according to an embodiment of the present disclosure.

### [Mode for Invention]

Hereinafter, some embodiments of the present disclosure will be described in detail with reference to the accompanying drawings. In adding reference numerals in the drawings, the same reference numerals will be used throughout to designate the same or equivalent components. In describing embodiments of the present disclosure, detailed descriptions associated with well-known functions or configurations will be omitted if they may make subject matters of the present disclosure unnecessarily obscure.

In the specification, a forward/rearward direction, a leftward/rightward direction, and an upward/downward direction are referred for convenience, and may be directions that are perpendicular to each other. In the specification, a horizontal direction and a vertical direction are referred for convenience, and may be directions that are perpendicular to each other. However, these directions are determined relatively with respect to a direction, in which components of an object supply system are arranged, and the upward/downward direction does not necessarily mean a vertical direction.

Additionally, terms including ordinal numbers, such as "first," "second," etc., used herein may be used to describe various components, but the components are not limited by the terms, and the terms are used only for the purpose of distinguishing one component from another. For example, without departing from the scope and spirit of the present disclosure, a first component may be referred to as a second component, and similarly, the second component may be referred to as the first component. The term "and/or" includes any combination of a plurality of related listed items or any one of the plurality of related listed items.

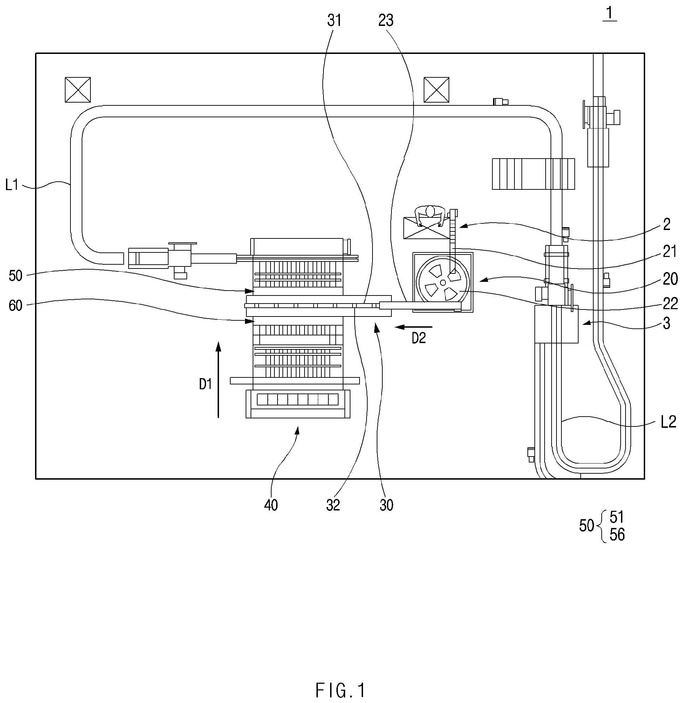

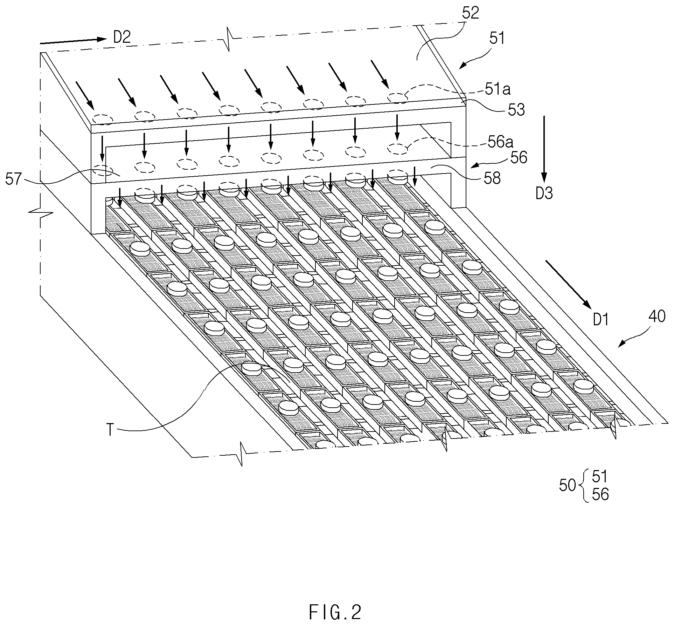

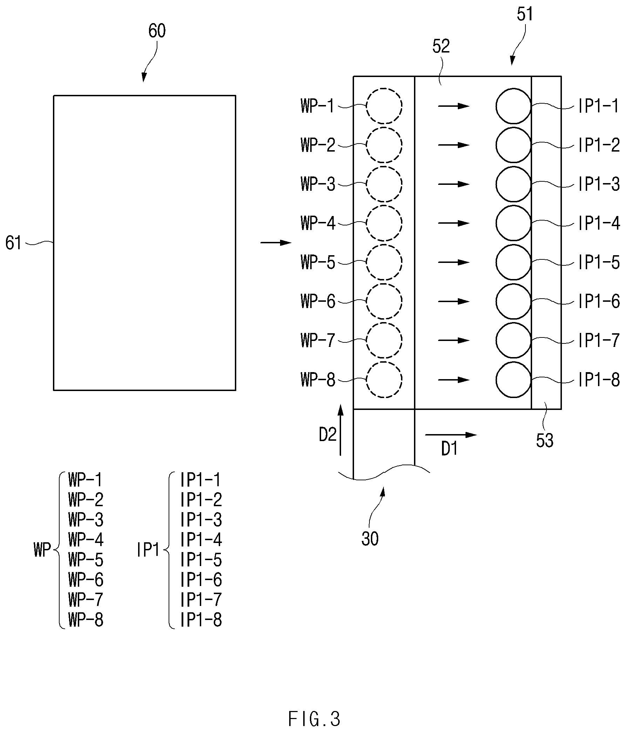

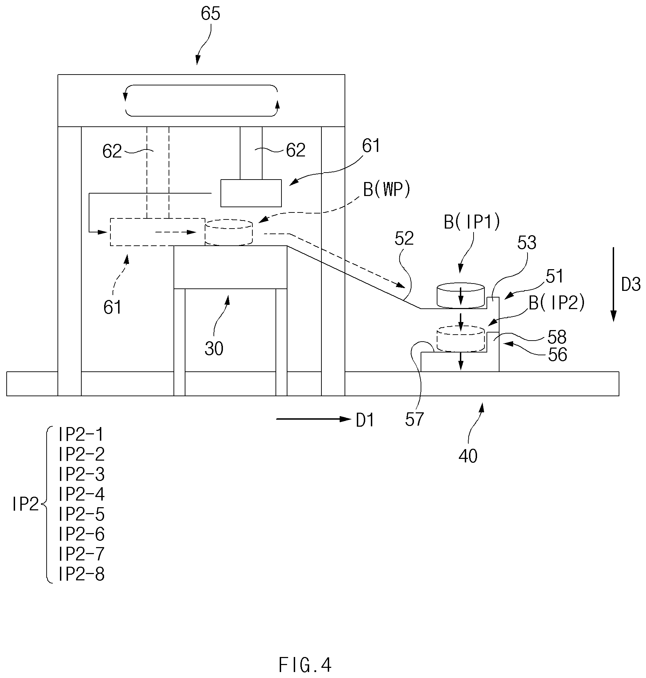

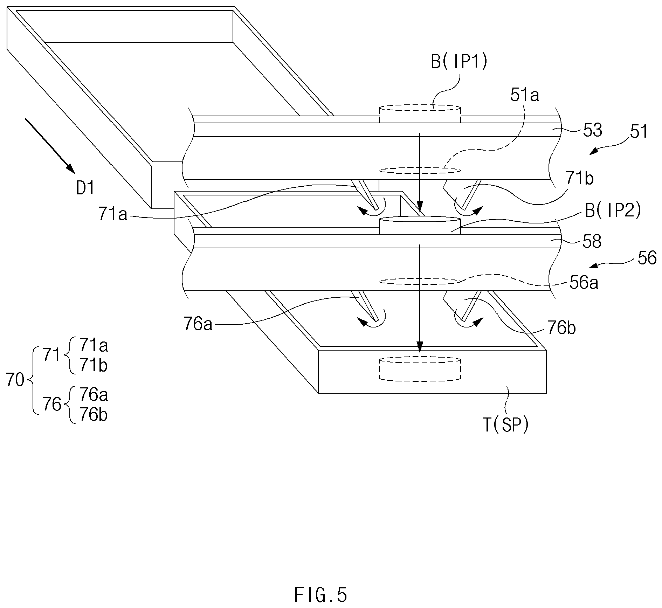

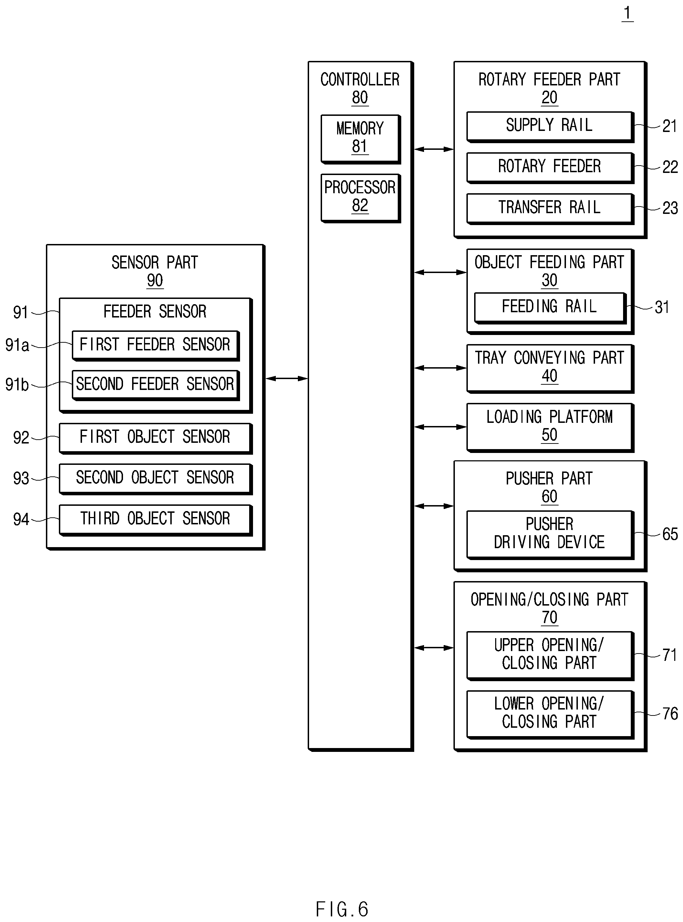

FIG. 1 is a schematic view of an object supply system 1 according to an embodiment of the present disclosure. FIG. 2 is a schematic view of a tray conveying part 30 and a loading platform 50 according to an embodiment of the present disclosure. FIG. 3 is a schematic view of a state in which an object B is moved from a waiting position WP to a first loading position IP1 according to an embodiment of the present disclosure. FIG. 4 is a side view of an object feeding part 30, a pusher part 60, and a loading platform 50 according to an embodiment of the present disclosure. FIG. 5 is a schematic view of a state in which an object B is loaded into a tray T according to an embodiment of the present disclosure. FIG. 6 is a block diagram of an object supply system 1 according to an embodiment of the present disclosure.

Referring to FIGS. 1 to 6, the object supply system 1 is a system for supplying the object B to the tray T. Here, the object B may be a frozen block, but is not limited thereto. As an example, the object supply system 1 may be a system for supplying frozen shrimp or frozen dumplings to the tray T, in which noodles are accommodated.

The object supply system 1 may include a sorting part 2 for allowing a user to sort defective products from the objects B, a rotary feeder part 20, to which the objects B sorted by the sorting part 2 are supplied, and an object feeding part 30 that feeds the objects B received from the rotary feeder part 20.

The object supply system 1 may include a tray conveying part 40 that is configured to convey the tray T in a first direction D1, an object feeding part 30 that is configured to feed the object B in a second direction D2, and a loading platform 50 that is disposed on an upper side (an opposite direction to D3) of the tray conveying part 40 and supports the object B loaded onto the tray T. The object supply system 1 may include a pusher part 60 that is configured to move the object B fed by the object feeding part 30, and an opening/closing part 70 that is mounted on the loading platform 50.

The object supply system 1 may include a controller 80 that includes a memory 81 and a processor 82, and a sensor part 90 that includes a plurality of sensors that are mounted on the respective components described above.

The object B may be supplied in large quantities to the sorting part 2. A user may identify a state of the object B in the sorting part 2 according to a preset criterion. The object B that does not meet the preset criterion may be sorted in the sorting part 2. The object B that meets the preset criterion may be supplied to the rotary feeder part 20 by the user.

The rotary feeder part 20 may be configured to supply the object B to the object feeding part 30. The rotary feeder part 20 may include a supply rail 21, a rotary feeder 22, and a transfer rail 23.

The supply rail 21 may be a rail for receiving the object B sorted by the user in the sorting part 2 and supplying the object B to the rotary feeder 22. The supply rail 21 may be a conveyor belt or the like.

The rotary feeder 22 may be a component for rotating the objects B to space the objects B apart in a unit of one object B. The rotary feeder 22 may rotate the objects B to receive the objects B from the supply rail 21 and to deliver the objects B to the transfer rail 23 one by one. That is, the rotary feeder 22 may rotate the objects B supplied in large quantities by the supply rail 21 and discharge the objects B to the transfer rail 23 one by one.

The transfer rail 23 may be connected to the object feeding part 30 and may be configured to deliver the object B discharged from the rotary feeder 22 to the object feeding part 30. The transfer rail 23 may be disposed on a lower side (the direction D3) of the rotary feeder 22. The transfer rail 23 may be a rail for receiving the object B from a discharge hole of the rotary feeder 22 one by one and delivering the object B to the object feeding part 30. The transfer rail 23 may be a conveyor belt or the like.

When the object B in an amount greater than or equal to a predetermined amount is supplied, the rotary feeder 22 may not operate properly. To prevent this, a feeder sensor 91 that is configured to sense the object B may be provided in the rotary feeder 22.

The feeder sensor 91 may sense whether objects B, the number of which is equal to or greater than a preset first number, have been supplied. When it is sensed that the objects B of the preset first number or more have been supplied by the feeder sensor 91, the feeder sensor 91 may deliver an electrical signal to the processor 82.

The feeder sensor 91 may include a specific first feeder sensor 91a, and a second feeder sensor 91b that is provided on a radially inner side of the rotary feeder 22 than the first feeder sensor 91a. The second feeder sensor 91b may be a component for sensing whether the objects B of the preset first number or more have been supplied to the rotary feeder 22 once again after sensing that the objects B of the preset first number or more have been supplied to the rotary feeder 22 by the first feeder sensor 91a.

When receiving an electrical signal from the first feeder sensor 91a or the second feeder sensor 91b, the processor 82 may control the supply rail 21 to stop an operation of the supply rail 21.

That is, the processor 82 may control the supply rail 21 to stop an operation of the supply rail 21 based on that objects B, the number of which is greater than the preset first number, are sensed in the rotary feeder 22.

However, the present disclosure is not limited thereto, and the feeder sensor 91 may be a component for sensing that the objects B are supplied to the rotary feeder 22 with a mass or a volume that is equal to or greater than a preset reference, and for delivering information corresponding thereto to the processor 82.

With this structure, because an operation of the rotary feeder 22 may be smoothly performed without an error, a productivity of the object supply system 1 may be improved.

When the object B is delivered to the object feeding part 30 by the transfer rail 23, the object feeding part 30 may feed the object B to a waiting position WP. In this case, the object feeding part 30 may feed a plurality of objects B to the waiting position WP.

Meanwhile, the waiting position WP may be a position, to which the object B is fed by the object feeding part 30. The waiting position WP may be a position before the object B is moved to an upper loading position IP1 that will be described later.

The tray conveying part 40 may extend in a first direction D1 to convey the tray T in the first direction D1. The tray conveying part 40 may include a conveying rail for conveying the tray T in the first direction D1.

The object feeding part 30 may extend in a second direction D2, which is a direction perpendicular to the first direction D1, to feed the object B in the second direction D2 from the rotary feeder part 20 toward the tray conveying part 40. The object feeding part 30 may include a feeding rail 31 and a spacer 32.

The feeding rail 31 may be disposed on an upper side (an opposite direction to D3) of the tray conveying part 40 to extend in the second direction D2 to feed a plurality of objects B. The spacer 32 may be mounted on the feeding rail 31 to space the plurality of objects B apart from each other while supporting the plurality of objects B.

As the feeding rail 31 feeds the plurality of objects B in the second direction D2, the plurality of objects B may reach the waiting position WP. In this case, the plurality of objects B may be fed by the feeding rail 31 at once so that eight objects B are loaded into the tray T at once. With this structure, a plurality of spacers 32 may be provided to be spaced apart from each other by a preset spacing distance such that eight objects B are arranged to correspond to the preset spacing distance.

The plurality of objects B may be spaced apart from each other by the preset spacing distance by the spacer 32, and may be fed to first to eighth waiting positions WP-1, WP-2, WP-3, WP-4, WP-5, WP-6, WP-7, and WP-8, respectively. The plurality of objects B that have reached the first to eighth waiting positions WP-1, WP-2, WP-3, WP-4, WP-5, WP-6, WP-7, and WP-8 may be moved to the loading platform 50. In this case, the waiting position WP may be provided as first to eighth waiting positions WP-1, WP-2, WP-3, WP-4, WP-5, WP-6, WP-7, and WP-8.

The loading platform 50 may be disposed on an upper side (an opposite direction to the direction D3) of the tray conveying part 40 and may be configured to receive the plurality of objects B located at the waiting position WP from the object feeding part 30 and deliver them to the tray T. The loading platform 50 may define supply holes 51a and 56a for loading the plurality of objects B toward the tray T.

More specifically, the loading platform 50 may include an upper loading platform 51 and a lower loading platform 56. The lower loading platform 56 may be disposed in a third direction D3 that is perpendicular to the first direction D1 and the second direction D2 of the upper loading platform 51.

The upper loading platform 51 may be a platform that is connected to the object feeding part 30 to support the plurality of objects B located at the first to eighth waiting positions WP-1, WP-2, WP-3, WP-4, WP-5, WP-6, WP-7, and WP-8 after they are pushed.

The upper loading platform 51 may include a sliding surface 52 that is configured such that the plurality of objects B are pushed by the pusher part 60 at the waiting position WP to be slid, and a stopper 53 that is formed on a side of the sliding surface 52, which is opposite to the object feeding part 30.

The sliding surface 52 may be connected to the object feeding part 30. The sliding surface 52 may be formed to be inclined in the third direction D3 toward the tray conveying part 40 with respect to the first direction D1 from the object feeding part 30. However, the sliding surface 52 is not limited thereto and may extend in parallel to the first direction D1 from the object feeding part 30.

The stopper 53 may be understood as a component that is formed on an opposite side to one side of the sliding surface 52, which is connected to the object feeding part 30, to fix positions of the plurality of objects B that are slid on the sliding surface 52. The plurality of objects B may be interfered by the stopper 53 to be stopped at the upper loading position IP1 so that the positions of the plurality of objects B may be fixed. The stopper 53 may be disposed on a side of the sliding surface 52 in the first direction D1 to allow the plurality of objects B to be caught and may extend toward an upper side (an opposite direction to D3).

Meanwhile, the upper loading platform 51 may include an upper supply hole 51a for allowing the plurality of objects B located at the upper loading position IP1 to fall in the third direction D3. The upper loading position IP1 may include first to eighth upper loading positions IP1-1, IP1-2, IP1-3, IP1-4, IP1-5, IP1-6, IP1-7, and IP1-8, at which the plurality of objects B located at the first to eighth waiting positions WP-1, WP-2, WP-3, WP-4, WP-5, WP-6, WP-7, and WP-8, respectively, are slid and positions thereof are fixed.

The upper loading platform 51 may include the upper supply hole 51a for loading the plurality of objects B, respectively, from the first to eighth upper loading positions IP1-1, IP1-2, IP1-3, IP1-4, IP1-5, IP1-6, IP1-7, and IP1-8 into the lower loading platform 56. Accordingly, eight upper supply holes 51a may be provided at positions corresponding to the first to eighth upper loading positions IP1-1, IP1-2, IP1-3, IP1-4, IP1-5, IP1-6, IP1-7, and IP1-8.

The lower loading platform 56 may be provided on a lower side (the direction D3) of the upper loading platform 51. The lower loading platform 56 may define a lower supply hole 56a that is disposed between the upper loading platform 51 and the tray conveying part 40 to load the plurality of objects B that have fallen through the upper supply hole 51a onto the tray T. When viewed in the third direction D3, the lower supply hole 56a may be disposed to correspond to the upper loading position IP1. The lower loading position IP2 may be provided as second to eighth lower loading positions IP2-1, IP2-2, IP2-3, IP2-4, IP2-5, IP2-6, IP2-7, and IP2-8 corresponding to the first to eighth upper loading positions IP1-1, IP1-2, IP1-3, IP1-4, IP1-5, IP1-6, IP1-7, and IP1-8, respectively.

To this end, the lower loading platform 56 may define a support surface 57 that supports the plurality of objects B that have fallen in the third direction D3 from the first to eighth upper loading positions IP1-1, IP1-2, IP1-3, IP1-4, IP1-5, IP1-6, IP1-7, and IP1-8.

Furthermore, a support part 58 that fixes positions of the plurality of objects B that have fallen may be provided at one side of the support surface 57 in the first direction D1. The support part 58 is a component for preventing the plurality of objects B from being slid in the first direction D1 and falling as the plurality of objects B are loaded onto the lower loading platform 56. The support part 58 may correspond to a structure of the stopper 53, but the present disclosure is not limited thereto, and a size or a shape thereof may be different, and it is sufficient as long as positions of the plurality of objects B that have fallen onto the lower loading platform 56 are fixed.

The lower loading platform 56 may include lower supply holes 56a that are disposed to correspond to the first loading position IP1 and are formed at the first to eighth lower loading positions IP2-1, IP2-2, IP2-3, IP2-4, IP2-5, IP2-6, IP2-7, and IP2-8, respectively. The lower supply holes 56a may also be provided as eight holes.

That is, the plurality of objects B may fall through the lower supply holes 56a toward the trays T disposed in the third direction D3 of the lower loading platform 56 to be loaded onto the trays T, respectively.

As described above, the reason why the lower loading platform 56 is provided may be that the plurality of objects B are loaded from the upper loading platform 51 onto the lower loading platform 56, and during a time period in which the plurality of objects B are supplied to the trays T through the lower supply holes 56a, the object feeding part 30 feeds another plurality of objects B again to the waiting position WP in sequence, so that the next plurality of objects B in sequence may be supplied to the trays T immediately.

In other words, according to a structure in which the plurality of objects B are supplied directly to the trays T through the upper loading platform 51 without the configuration of the lower loading platform 56, the plurality of objects B that are fed in sequence thereafter may be supplied to the upper loading platform 51 again after a delay corresponding to a time required for the plurality of objects B to be supplied, and thus a production speed of the object supply system 1 may be reduced.

On the other hand, according to an embodiment of the present disclosure, during a time period in which the plurality of objects B are supported by the lower loading platform 56 and fall again, the next plurality of objects B in sequence may be fed to the waiting position WP and may be slid to the upper loading platform 51, so that an optimization of a production speed of the object supply system 1 may be achieved.

As such, the upper loading platform 51 may be disposed on a side of the object feeding part 30 in the first direction D1. The upper loading platform 51 may support the plurality of objects B while the plurality of objects B located at the waiting position WP are slid. In this case, the plurality of objects B located at the waiting position WP may be moved to the upper loading position IP1 by the pusher part 60.

The pusher part 60 may be configured to push the plurality of objects B simultaneously to move the plurality of objects B located at the waiting position WP to the upper loading position IP1. The pusher part 60 may be disposed on an upper side (an opposite direction to D3) of the object feeding part 30 and the loading platform 50.

The pusher part 60 may include a pusher 61 for pushing the plurality of objects B located at the waiting position WP in the first direction D1, and a pusher driving device 65.

As an example, the pusher 61 disposed in a direction opposite to the first direction D1 from the object feeding part 30 may be moved in the first direction D1 to move the plurality of objects B that have reached the first to eighth waiting positions WP-1, WP-2, WP-3, WP-4, WP-5, WP-6, WP-7, and WP-8 to the first to eighth upper loading positions IP1-1, IP1-2, IP1-3, IP1-4, IP1-5, IP1-6, IP1-7, and IP1-8.

The pusher driving device 65 may be a device that drives the pusher 61. The pusher driving device 65 may be moved in the first direction D1 after the pusher 61 pushes the plurality of objects B to lift the pusher 61 and move the pusher 61 in an opposite direction to the first direction D1.

As an example, as illustrated in FIG. 4, after the pusher 61 pushes the object B that is located at the waiting position WP to the upper loading platform 51, the pusher driving device 65 may pull a pusher connecting part 62 to lift the pusher 61 in an opposite direction to the third direction D3. Afterward, the pusher 61 may be moved in an opposite direction to the first direction D1 to push the pusher connecting part 62 so that the pusher 61 faces the third direction D3 again. In this way, the reason why the pusher driving device 65 lifts or lowers the pusher 61 may be to prevent interference between the pusher 61 and the objects B that are located at the waiting position WP of a next sequence after the pusher 61 pushes the objects B.

In this case, during a time in which the pusher 61 is lifted by the pusher driving device 65 and returns to a position for pushing the objects B again, the object feeding part 30 may move the plurality of objects B to the waiting position WP again, and the upper loading platform 51 and the lower loading platform 56 may drop the objects B sequentially to supply the objects B to the tray T.

In this way, according to the structure according to an embodiment of the present disclosure, because the plurality of objects B are supplied to the tray T within as short a cycle as possible, it may be possible to optimize a production speed of the object supply system.

Meanwhile, a structure for allowing the object B to be introduced in the third direction D3 from the upper loading platform 51 and the lower loading platform 56 may be required. For this purpose, the object supply system 1 may include an opening/closing part 70 that is mounted on the loading platform 50 to open and close the supply holes 51a and 56a so that the object B may be loaded onto the tray T.

More specifically, the opening/closing part 70 may include an upper opening/closing part 71 that is mounted on the upper loading platform 51 to allow the object B that is located at the upper loading position IP1 to fall to the lower loading position IP2.

The upper opening/closing part 71 may include a first upper opening/closing door 71a and a second upper opening/closing door 71b that are mounted on the upper loading platform 51 and are rotated in opposite directions. The first upper opening/closing door 71a and the second upper opening/closing door 71b may be rotated in opposite directions to open or close the upper supply hole 51a.

The opening/closing part 70 may include a lower opening/closing part 76 that is mounted on the lower loading platform 56 to load the object B that is located at the lower loading position IP2 onto the tray T that is located at the receiving position SP. The lower opening/closing part 76 may include a first lower opening/closing door 76a and a second lower opening/closing door 76b that are mounted on the lower loading platform 56 and are rotated in opposite directions. The first lower opening/closing door 76a and the second lower opening/closing door 76b may be rotated in opposite directions to open or close the lower supply hole 56a.

Hereinafter, an operation principle, in which the processor 72 operates the pusher part 60 and the opening/closing part 70, will be described in detail.

A first object sensor 92 that is configured to sense the plurality of objects B that reach the first to eighth waiting positions WP-1, WP-2, WP-3, WP-4, WP-5, WP-6, WP-7, and WP-8 may be provided at one end of the object feeding part 30.

The first object sensor 92 may sense that each of the plurality of objects B reaches the first to eighth waiting positions WP-1, WP-2, WP-3, WP-4, WP-5, WP-6, WP-7, and WP-8 and may deliver an electrical signal to the processor 82.

The processor 82 may receive the electrical signal delivered by the first object sensor 92 and may operate the pusher driving device 65 of the pusher part 60. In other words, the processor 82 may control the pusher part 60 to push the object B that is located at the waiting position WP to the upper loading position IP1 based on that the object B located at the waiting position WP is sensed by the first object sensor 92.

Meanwhile, a second object sensor 93 that is configured to sense the plurality of objects B that have reached the first to eighth upper loading positions IP1-1, IP1-2, IP1-3, IP1-4, IP1-5, IP1-6, IP1-7, and IP1-8 may be provided at a portion of the upper loading platform 51, which is adjacent to the stopper 33.

The second object sensor 93 may sense that each of the plurality of objects B reaches the first to eighth upper loading positions IP1-1, IP1-2, IP1-3, IP1-4, IP1-5, IP1-6, IP1-7, and IP1-8 and may deliver an electrical signal to the processor 82.

The processor 82 may receive the electrical signal from the second object sensor 93 to operate the upper opening/closing part 71. In other words, the processor 82 may operate the upper opening/closing doors 71a and 71b to open the upper supply hole 51a such that the object B falls to the lower loading position IP2 of the lower loading platform 56 based on that the object B is located at the upper loading position IP1.

A third object sensor 94 that is configured to sense the plurality of objects B that have reached the first to eighth lower loading positions IP2-1, IP2-2, IP2-3, IP2-4, IP2-5, IP2-6, IP2-7, and IP2-8 may be provided at a portion of the lower loading platform 56, which is adjacent to the support part 58.

The third object sensor 94 may sense that each of the plurality of objects B reaches the first to eighth lower loading positions IP2-1, IP2-2, IP2-3, IP2-4, IP2-5, IP2-6, IP2-7, and IP2-8 and may deliver an electrical signal to the processor 82.

The processor 82 may receive the electrical signal from the third object sensor 94 to operate the lower opening/closing part 76. In other words, the processor 82 may operate the lower opening/closing doors 76a and 76b to open the lower supply hole 56a such that the object B is loaded onto the tray T based on that the object B is located at the lower loading position IP2.

When the first object sensor 92 senses the object B that is located at the waiting position WP, the processor 82 may control the pusher driving device 65 to move the pusher 61 in the first direction D1 and thereafter lift the pusher 61 to return the pusher 61 to a position for pushing the object that is located at the waiting position WP.

When the second object sensor 93 senses at least one object B that is located at the upper loading position IP1, the processor 82 may control the upper opening/closing doors 71a and 71b to open the upper supply hole 51a and thereafter control the upper opening/closing doors 71a and 71b to close the upper supply hole 51a again after a predetermined time has elapsed.

When the third object sensor 94 senses at least one object B that is located at the lower loading position IP2, the processor 82 may control the lower opening/closing doors 76a and 76b to open the lower supply hole 56a and thereafter control the lower opening/closing doors 76a and 76b to close the lower supply hole 56a again after a predetermined time has elapsed.

Although FIG. 5 illustrates that one object B is loaded onto one tray T, it may be understood that, in the upper loading platform 51 and the lower loading platform 56 according to an embodiment of the present disclosure, a plurality of upper opening/closing parts 71 are mounted on each of the plurality of upper supply holes 51a and the lower opening/closing parts 76 are mounted on each of the plurality of lower supply holes 56a such that the plurality of objects B are loaded onto the plurality of trays T simultaneously.

When each of the plurality of objects B is loaded onto each of the plurality of trays T that are located at the supply position SP, the plurality of trays T may be conveyed by the tray conveying part 40 along the first direction D1. In this case, the tray conveying part 40 may also be controlled by the processor 82.

Accordingly, all of the processes described above may be repeated. That is, when the plurality of trays T are conveyed in the first direction D1, another plurality of trays T may be conveyed to the supply position SP so that another plurality of objects B may be loaded onto the trays T.

As illustrated in FIG. 1, the plurality of trays T onto which the plurality of objects B are loaded may be conveyed in the first direction D1 and may be conveyed through the first conveying line L1. The second conveying line L2 may convey the plurality of trays T that are connected to the first conveying line L1 and arranged thereon, and the plurality of trays T that are conveyed through the second conveying line L2 may be sorted by a weighing part 3 according to a predetermined criterion, such as a weight.

Referring to FIG. 6, the controller 80 may transmit and receive electrical signals to and from the feeder sensor 91, the first object sensor 92, the second object sensor 93, and the third object sensor 94 of the sensor part 90.

The controller 80 may transmit and receive electrical signals to and from the rotary feeder part 20, the object feeding part 30, the tray conveying part 40, the loading platform 50, the pusher part 60, and the opening/closing part 70.

The controller 80 may include a memory 81 and a processor 82. The memory 81 may include a volatile memory of a static random access memory (S-RAM) and a dynamic random access (D-RAM) for temporarily storing data while electric power is being supplied, and a nonvolatile memory, such as a read only memory (ROM) and an erasable programmable read only memory (EPROM) for storing data even when the supply of the electric power is cut off.

The processor 82 may include various logic circuits and operation circuits, and may process data according to a program provided from the memory 81 and generate a control signal according to a processing result.

The processor 82 may receive an electrical signal from the feeder sensor 91 to control an operation of the rotary feeder part 20. More specifically, when it is sensed by the feeder sensor 91 that more than a first predetermined number of objects B are supplied to the rotary feeder 22, the processor 82 may stop an operation of the supply rail 21.

The processor 82 may control an operation of the feeding rail 31. When the processor 82 receives the electrical signal from the first object sensor 92 that senses that the plurality of objects B reach the waiting position WP, the processor 82 may stop an operation of the feeding rail 31 for a predetermined time. Alternatively, when the processor 82 receives the electrical signal from the first object sensor 92 that senses that the plurality of objects B reach the waiting position WP, the processor 82 may reduce a conveying speed of the feeding rail 31. When the processor 82 receives the electrical signal from the first object sensor 92, the processor 82 may operate the pusher driving device 65 of the pusher part 60.

A method for controlling the object supply system 1 through the above-described structure will be described later.

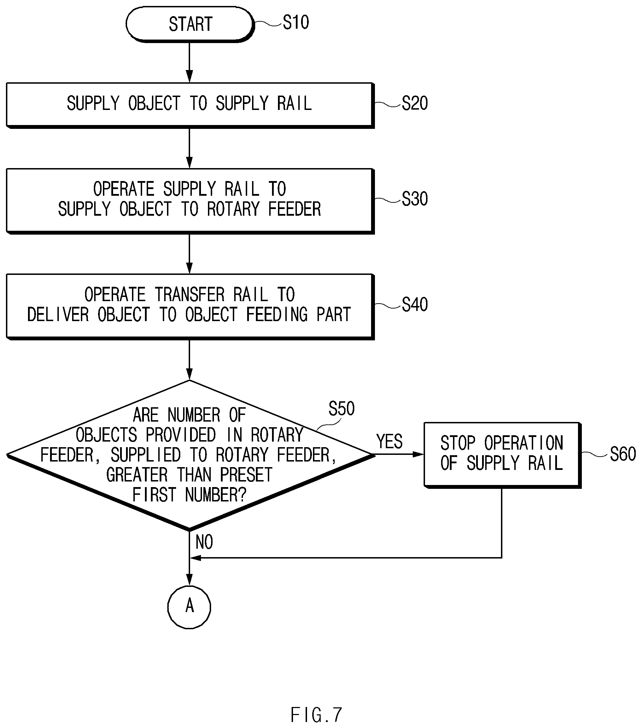

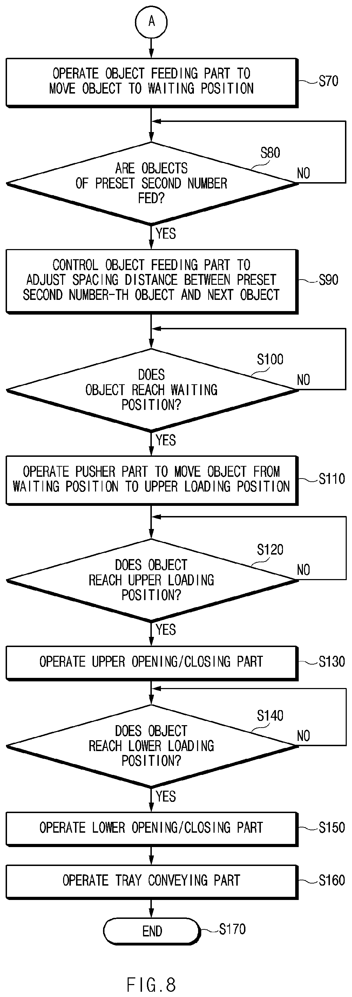

FIGS. 7 and 8 are flowcharts of a method for controlling the object supply system 1 according to an embodiment of the present disclosure. Referring to FIGS. 1 to 8, the object supply system 1 may receive electric power and start an operation thereof (S10).

When the object supply system 1 starts the operation, the objects B may be supplied in large quantities to the supply rail 21 (S20). When the objects B are supplied in large quantities to the supply rail 21, the supply rail 21 may be operated to feed the objects B to the rotary feeder 22 (S30). The rotary feeder 22 may deliver the objects B from the supply rail 21 to the transfer rail 23, and the transfer rail 23 may be operated to deliver the objects B one by one to the object feeding part 30 (S40).

In this case, whether the objects B provided in the rotary feeder 22 are supplied in a number greater than a first predetermined number may be sensed by the feeder sensor 91 (S50). When the objects B provided in the rotary feeder 22 are supplied in a number greater than the preset first number (Yes in S50), an operation of the supply rail 21 may be stopped and interrupted (S60).

However, the sensing by the feeder sensor 91 is not limited to the number of the objects B, and the feeder sensor 91 may sense the objects B to deliver an electrical signal to the processor 82 for comparing magnitudes of a volume or a mass of the objects B that are supplied to the rotary feeder 22. In this case, the processor 82 may stop an operation of the supply rail 21 when a volume or a mass of the objects B that are supplied to the rotary feeder 22 becomes greater than a preset reference based on the electrical signal received from the feeder sensor 91.

When the objects B provided in the rotary feeder 22 are supplied in a number less than the preset first number (No in S50), the object feeding part 30 may be operated to move the plurality of objects B to the respective waiting positions WP (S70).

The object feeding part 30 may feed the plurality of objects B in the second direction D2 by arranging the plurality of objects B in one row through the feeding rail 31. The object feeding part 30 may feed the object B to the waiting position WP. In this case, when it is sensed by a separate object sensor that the objects B are fed by a preset second number (Yes in S80), a speed of the object feeding part 30 may be controlled (S90). Here, the preset second number may be eight.

When the objects B are not fed by the preset second number (No in S80), a speed of the rotary feeder 22 and the feeding rail 31 may be maintained.

In this case, when the eight objects B are fed by the object feeding part 30, a spacing distance between the ninth object B and the eighth object B may be adjusted to be greater than a spacing distance between the eight objects B on the feeding rail 31.

In other words, the processor 82 may adjust a distance between the first object B to the eighth object B that are arranged to be loaded onto the tray T simultaneously and a distance between the ninth object B that is arranged to be loaded onto the tray T after the eighth object B and the eighth object B to be different on the feeding rail 31.

The eight objects B being fed to the object feeding part 30 may be for allowing the eight objects B to be loaded onto the tray T simultaneously. However, the ninth object B is loaded onto the tray T later than the preceding eight objects B, and because time is required for loading the preceding eight objects B, a distance between the eighth object B and the ninth object B may be provided to be greater than a distance between the preceding eight objects B. To this end, a speed of the feeding rail 31 of the object feeding part 30 may be controlled (S90).

Thereafter, whether the plurality of objects B reach the respective waiting positions WP by the object feeding part 30 may be sensed by the first object sensor 92 (S100).

Thereafter, when the plurality of objects B reach the waiting position WP by the object feeding part 30 (Yes in S100), the pusher part 60 may be operated to move the plurality of objects B from the waiting position WP to the upper loading position IP1 (S110). In other words, the plurality of objects B that are fed to the waiting position WP may be moved to the upper loading position IP1 for falling to the lower loading platform 56.

When the plurality of objects B do not reach the waiting position WP (No in S100), an operation of the object feeding part 30 may be maintained until the plurality of objects B reach the waiting position WP.

Thereafter, whether at least one object B reaches the upper loading position IP1 by the pusher part 60 may be sensed by the second object sensor 93 (S120). Based on that at least one object B reaches the upper loading position IP1 (Yes in S120), the upper opening/closing part 71 may be operated to open the upper supply hole 51a (S130)., Thereafter when a predetermined time has elapsed, the upper opening/closing part 71 may close the upper supply hole 51a.

When at least one object B does not reach the upper loading position IP1 (No in S120), the upper opening/closing part 71 may be maintained not to open the upper supply hole 51a until at least one object B reaches the upper loading position IP1.

Thereafter, whether at least one object B reaches the lower loading position IP2 may be sensed by the third object sensor 94 (S140). Based on that at least one object B reaches the lower loading position IP2 (Yes in S140), the lower opening/closing part 76 may be operated to open the lower supply hole 56a (S150). Thereafter, when a predetermined time has elapsed, the lower opening/closing part 76 may be operated to close the lower supply hole 56a.

When at least one object B does not reach the lower loading position IP2 (No in S140), the lower opening/closing part 76 may be maintained not to open the lower supply hole 56a until at least one object B reaches the lower loading position IP2.

After the lower opening/closing part 76 is operated to open the lower supply hole 56a, the tray conveying part 40 may convey the plurality of trays T that are located at the supply position SP in the first direction D1 and simultaneously convey a new plurality of trays T to the supply position SP.

The processes described above may be repeated and thereafter may be terminated (S180).

The above description is merely an example of the technical idea of the present disclosure, and various modifications and variations may be made by one skilled in the art without departing from the essential characteristic of the present disclosure. Accordingly, embodiments of the present disclosure are intended not to limit but to explain the technical idea of the present disclosure, and the scope and spirit of the present disclosure is not limited by the above embodiments. The scope of protection of the present disclosure should be construed by the attached claims, and all equivalents thereof should be construed as being included within the scope of the present disclosure.

## Claims

1. An object supply system comprising:
an object feeding part configured to feed an object to a waiting position;
a tray conveying part configured to convey a tray and disposed on a lower side of the object feeding part;
a loading platform configured to receive the object located at the waiting position from the object feeding part to deliver the object to the tray, and defining a supply hole for loading the object toward the tray; and
an opening/closing part mounted on the loading platform to open and close the supply hole such that the object is loaded onto the tray.

2. The object supply system of claim 1, wherein the loading platform includes:
an upper loading platform connected to the object feeding part and defining an upper supply hole, through which the object falls; and
a lower loading platform disposed between the upper loading platform and the tray conveying part, and defining a lower supply hole for loading the object having fallen through the upper supply hole onto the tray.

3. The object supply system of claim 2, wherein the lower supply hole is disposed to correspond to a position of the upper supply hole.

4. The object supply system of claim 2, wherein the object feeding part extends in a first direction to feed the object in the first direction, and
wherein the upper loading platform includes a sliding surface connected to the object feeding part, and formed to be inclined toward the tray conveying part with respect to a second direction perpendicular to the first direction.

5. The object supply system of claim 4, wherein the upper loading platform includes a stopper formed on a side of the sliding surface opposite to the object feeding part, and configured to fix a position of the object sliding on the sliding surface.

6. The object supply system of claim 2, wherein the opening/closing part includes:
an upper opening/closing part mounted on the upper loading platform and configured to open and close the upper supply hole; and
a lower opening/closing part mounted on the lower loading platform and configured to open and close the lower supply hole.

7. The object supply system of claim 6, wherein the upper opening/closing part is configured to open the upper supply hole based on that the object located at an upper loading position corresponding to the upper supply hole is sensed by a first object sensor, and
wherein the lower opening/closing part is configured to open the lower supply hole based on that the object located at a lower loading position corresponding to the lower supply hole is sensed by a second object sensor.

8. The object supply system of claim 2, further comprising:
a pusher part configured to push the object located at the waiting position such that the object is moved to an upper loading position corresponding to the upper supply hole.

9. The object supply system of claim 8, wherein the object feeding part extends in a first direction to feed the object in the first direction, and
wherein the pusher part includes a pusher moved in a second direction perpendicular to the first direction to push the object located at the waiting position to the upper loading position.

10. The object supply system of claim 9, wherein the pusher part further includes a pusher driving device configured to lift the pusher moved in the second direction to push the object so as to move the pusher in an opposite direction to the second direction.

11. The object supply system of claim 8, wherein the pusher part is configured to push the object located at the waiting position based on that the object located at the waiting position is sensed by a first object sensor.

12. The object supply system of claim 1, further comprising:
a rotary feeder part including a transfer rail connected to the object feeding part and configured to deliver the object to the object feeding part, and a rotary feeder configured to receive a plurality of objects and rotate the plurality of objects to deliver the plurality of objects to the transfer rail one by one.

13. The object supply system of claim 12, wherein the rotary feeder part further includes a supply rail configured to supply the objects to the rotary feeder, and
wherein the supply rail is configured to stop operation based on that objects, the number of which is greater than a predetermined number, are sensed in the rotary feeder by a feeder sensor configured to sense the objects.

14. The object supply system of claim 1, wherein the object feeding part includes a feeding rail configured to feed a plurality of objects and a spacer mounted on the feeding rail to space the plurality of objects apart from each other.

15. A method for controlling an object supply system, the method comprising:
receiving an object and feeding the object to a waiting position;
moving the object fed to the waiting position to an upper loading position;
opening an upper supply hole such that the object is moved to a lower loading position based on that the object reaches the upper loading position; and
opening a lower supply hole such that the object is loaded onto a tray based on that the object reaches the lower loading position.

16. The method of claim 15, further comprising: after opening the upper supply hole, closing the upper supply hole.

17. The method of claim 15, further comprising:
after opening the lower supply hole, closing the lower supply hole.

18. The method of claim 15, further comprising:
after opening the lower supply hole, convoying the tray.

19. The method of claim 15, further comprising:
performing a control to stop an operation of a supply rail configured to supply the object to a rotary feeder based on that object, the number of which is greater than a predetermined number, is supplied to the rotary feeder for supplying the object to an object feeding part configured to feed the object to the waiting position.

20. The method of claim 15, further comprising:
differently adjusting a distance between a first object and a second object configured to be loaded onto the tray simultaneously, and a distance between a third object supplied to a feeding rail of an object feeding part next to the second object and the second object, in the feeding rail configured to feed the object to the waiting position.
